# NEUE EUROPÄISCHE PATENTSCHRIFT

(11) **EP 0 305 822 B2**
(45) Veröffentlichungstag und Bekanntmachung des Hinweises auf die Entscheidung über den Einspruch: **24.05.1995**
(45) Hinweis auf die Patenterteilung: 30.10.1991
(21) Anmeldenummer: 88113474.6
(22) Anmeldetag: 19.08.1988
(51) Int. Cl.: H01M 2/12, H01M 2/04

(54) **Mehrzellige Batterie mit in den Batteriedeckel integrierter zentraler Entgasungsleitung**
Storage battery having a plurality of cells and a central degassing system integrated in the battery cover
Batterie multicellulaire à conduite de dégazage central intégrée dans le couvercle de la batterie

(30) Priorität: 04.09.1987 DE 3729610
(43) Veröffentlichungstag der Anmeldung: 08.03.1989
(73) Patentinhaber: VB Autobatterie GmbH, D-30419 Hannover (DE)
(72) Erfinder: Petri, Bernd, D-3016 Seelze 9 (DE); Streuer, Peter, D-3000 Hannover 61 (DE)
(74) Vertreter: Kaiser, Dieter Ralf, Dipl.-Ing.

(56) Entgegenhaltungen:
- EP-A- 0 132 943
- GB-A- 1 423 385
- US-A- 4 348 466
- US-A- 4 463 069
- US-A- 4 613 550

## Beschreibung

Die Erfindung betrifft eine mehrzellige Batterie mit in den Batteriedeckel integrierter zentraler Entgasungsleitung, die durch einen porösen Körper nach außen abgeschlossen ist.

Batteriedeckel werden heute zumeist als einstückige haubenförmige Spritzteile gefertigt und mit den mit den Plattenpaketen fertig bestückten Blockkästen spiegelverschweißt. Dabei werden durch entsprechende Zwischenwände in der Dekkelhaube einerseits die den Blockkasten unterteilenden Zellentrennwände bis zur vollen Bauhöhe der Batterie ergänzt, andererseits aber auch die kaminartig in das Deckelinnere hineinragenden Einfüllstutzen einer jeden Zelle mit einem Kanal derart verbunden, daß die Gasräume aller Zellen, nachdem die Einfüllöffnungen mit Verschlußstopfen dicht verschlossen worden sind, über den gemeinsamen Gaskanal kommunizieren. Auf diese Weise wird ein in die Deckelhaube integriertes, konstruktionsmäßig gegenüber den gewöhnlichen Bauelementen einer Batterie selbständiges System zum Ableiten der aus den Zellen austretenden säurehaltigen Gase gebildet, wie es z.B. aus der DE-OS 34 44 011 bekannt ist.

Es ist aus dieser Druckschrift oder aus der US-PS 4,463,069 weiterhin bekannt, die Austrittsöffnung eines zentralen Entgasungssystems. die sich ebenfalls am Batteriedeckel befindet, mit einem porösen Körper abzuschließen, der ein ungehindertes Ausströmen der Akkumulatorgase gestattet. umgekehrt jedoch das Durchschlagen einer äußeren Zündflamme mit Explosionsfolge im Innern der Batterie verhindern soll.

Zünddurchschlagssperren solcher Art werden im Laufe des Batteriebetriebes durch mit den Gasen mitgeschleppte Säurenebel feucht. Dabei führt die Verstopfung der Poren zu einem unerwünschten hohen Strömungswiderstand.

Diesen Mangel besitzt auch ein Entlüftungsventil gemäß DE-OS 35 16 552, welches in einer vertikal durchströmten Kombinationsanordnung zwischen einer flammhemmenden gasdurchlässigen Scheibe und einem Ventilteil aus einem einzigen elastomeren Formkörper besteht.

Der Erfindung liegt deshalb die Aufgabe zugrunde, eine mehrzellige Batterie nach dem eingangs formulierten Gattungsbegriff verfügbar zu machen, deren Gasentsorgung einwandfrei funktioniert und bei der einem Dichtsetzen des Flammschutzfilters vorgebeugt ist.

Die Aufgabe wird erfindungsgemäß mit den im Anspruch 1 angegebenen Mitteln gelöst.

Danach hat sich die Absperrung der Entgasungsleitung durch einen porösen Körper als erfolgreich erwiesen, der sich nicht waagerecht, sondern senkrecht zum Elektrolytspiegel erstreckt und dabei parallel zum Elektrolytspiegel, d.h. in horizontaler Richtung, durchströmt wird. Der poröse Körper ist beispielsweise eine Fritte aus Keramik oder einem säurebeständigen Kunststoff, beispielsweise Polypropylen, Polyethylen oder Polytetrafluorethylen. In der vorzugsweisen Ausführungsform einer Scheibe ist sie erfindungsgemäß senkrecht zur Elektrolytoberfläche angeordnet und so zum Gasstrom orientiert, daß dieser sie in Richtung ihrer geringsten Dicke durchströmt.

Vor dem porösen Körper ist, in Strömungsrichtung gesehen, noch ein Überdruckventil angeordnet. Sowohl das Überdruckventil als auch der Frittenkörper sind durch eine gemeinsame Kapsel zu einem integralen Bauteil zusammengefügt welches von oben durch ein Öffnung des Batteriedeckels in ein Unterbrechung der Entgasungsleitung eingeschoben werden kann. Die Entgasungsleitung ist an dieser Stelle, die sich vor kurz vor ihrer Ausmündung ins Freie befindet, kammerartig erweitert, was eine paßgenaue Einfügung der Kapsel, die mit ihren offenen Seiten den Querschnitt der Entgasungsleitung exakt abdecken muß, erleichtert.

Durch die gesonderte Anordnung von porösem Körper und Überdruckventil in einer steckbaren Kapsel sind diese für den Explosionsschutz und die geregelte Entgasung wichtigen Einrichtungen auswechselbar und rasch zu ersetzen. Sie beanspruchen außerhalb des Batteriegehäuses auch keinen zusätzlichen Raum. Das Ventil, welches auf einen Gasüberdruck zwischen 50 mbar und 100 mbar öffnet und nach Entlüftung sofort wieder schließt, schützt die Fritte wirksam vor Feuchtigkeit bei Rütteln oder Kippen der Batterie. Durch ihre Verlegung von der Außenseite des Deckels in das Vorfeld der eigentlichen Ausmündung der Entgasungsleitung, nämlich in die Aufnahmekammer der Kapsel, bleibt die Gasaustrittsöffnung frei für eventuelle Schlauchabgänge.

Eine besonders vorteilhafte Ausführungsform der Erfindung wird anhand der Figuren näher erläutert.

Figur 1 zeigt ein in Höhe der Elektrolyteinfüllöffnungen geschnittenes Deckelfragment der erfindungsgemäßen Batterie mit darin einzusetzender Frittenkapsel.

Figur 2 zeigt die Frittenkapsel im Längsschnitt.

Figur 3 zeigt den Boden der Frittenkapsel von der Innenseite in einer Draufsicht.

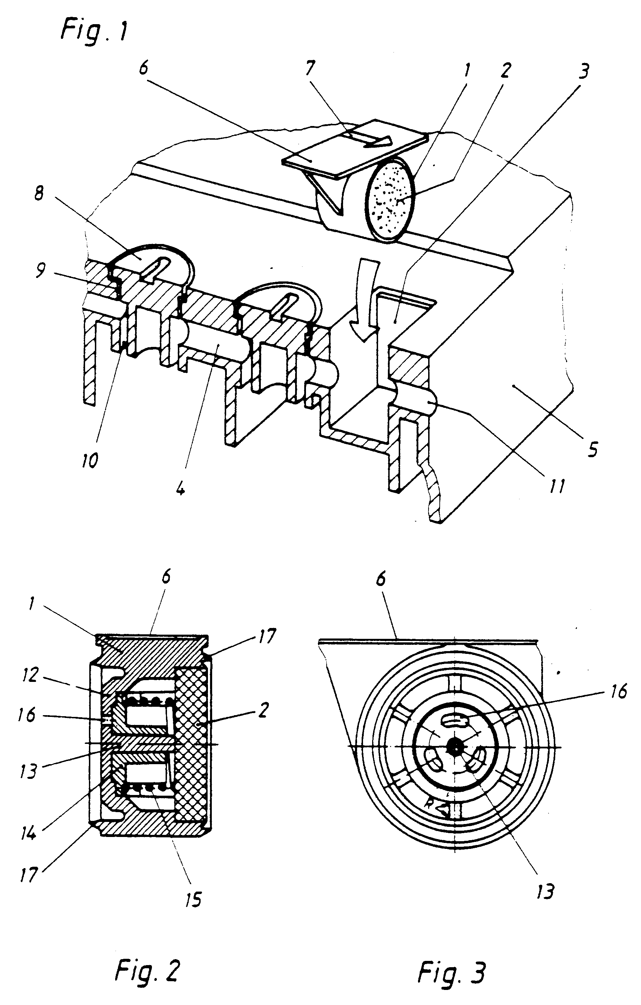

Gemäß Figur 1 wird die von einer zylindrischen Kunststoffkapsel 1 eingefaßte Keramikfritte 2, an deren Rückseite ein Federventil angeordnet ist, so in die kammerartige Erweiterung 3 des Entgasungsrohres 4 im Deckel 5 eingesetzt, daß der auf dem Deckplättchen 6 dargestellte Pfeil 7 mit der Auslaßrichtung der Gase übereinstimmt.

Die Verschlußstopfen 8 sind in der Regel in die Einfüllöffnungen 9 eingeschraubt (das Gewinde ist hier aus Vereinfachungsgründen nicht dargestellt) und schließen diese nach oben dicht ab. Durch eine Durchmesserverjüngung der Stopfen sind zwischen ihnen und den Einfüllöffnungen Ringspalte 10 geschaffen, die eine durchgehende Gaskommunikation zwischen den Einzelzellen entlang der Rohrleitung erlauben.

In ihrer Einsatzstellung ist die Kapsel zentrosymmetrisch vor der Gasaustrittsöffnung 11 positioniert und kann zum Auswechseln durch Untergreifen unter das Deckplättchen z.B. mittels eines kleinen Schraubenziehers wieder entfernt werden.

Nach Figur 2 besitzt die zylindrische Kapsel 1 auf der dem Frittenkörper abgekehrten Seite einen Boden 12, dem ein einwärts gerichteter zentrischer Zapfen 13 angeformt ist. Der Zapfen bildet die Führung für einen Ventilteller 14, welcher durch die Kraft einer Spiralfeder 15 gegen den Boden 12 gepreßt wird und der damit den von links anströmenden Akkumulatorgasen, solange ihr Druck gering ist, den Durchtritt durch im Boden vorhandene Ventilöffnungen 16 (in der hier gewählten Schnittebene ist nur das obere der drei Ventilöffnungen aus Figur 3 erkennbar) versperrt. Die Ventilfeder 15 aus einem korrosionsstabilen Federstahl stützt sich dabei auf dem Frittenkörper ab.

Zwecks guter Abdichtung gegen den Batteriedeckel ist die Kapsel 1 zu beiden Seiten mit umlaufenden Dichtlippen 17 versehen.

Sobald der Gasdruck im Entgasungsrohr einen bei 50 mbar bis 100 mbar liegenden Schwellenwert (Ansprechdruck) überschreitet, hebt sich der Ventilteller vom Boden der Kapsel ab und gibt nun, aufgrund des einem Stufenkolben nachgebildeten Bodenprofils, einen gegenüber den verhältnismäßig engen Ventillöchern plötzlich stark vergrößerten Belüftungsquerschnitt frei. Dies führt zu einer momentanen Entspannung, woraufhin sich das Ventil wieder schließt. Die Gasentsorgung der erfindungsgemäßen Batterie findet auf diese Weise nicht kontinuierlich, sondern nur in stoßartigen Intervallen mit zwischenliegenden, zeitlich ausgedehnten Ruhephasen statt.

Durch das vorgeschaltete Ventil wird mit den Gasen mitgeschleppte Feuchtigkeit vom Frittenkörper ferngehalten, indem sie sich größtenteils bereits vor dem Boden der Kapsel sammelt und vor dort leicht wieder über die Sammelleitung in die nächstliegende Zelle zurückfließen kann. Ein dennoch vom porösen Körper aufgefangener Feuchtigkeitsrest kann den Gasdurchlaß auch langfristig nicht behindern, da wegen der vertikalen Längserstreckung des Körpers, die bis weit unter das Niveau der Entgasungsleitung herabreicht, ein gebildetes Flüssigkondensat von selbst aus der durchströmten Mitte des Frittenkörpers in seinen unteren Teil abwandert.

Die Draufsicht auf den Boden der Kapsel von der Innenseite her gemäß Figur 3 läßt die Anordnung der Ventilöffnungen zentrosymmetrisch um den Führungszapfen 13 herum erkennen. Das Deckplättchen 6 mit Richtungspfeil 7 erscheint hier mit seiner Längskante. Nach dem korrekten Einsetzen der Kapsel in die kammerartige Erweiterung 3 muß das Deckplättchen 6 mit der Oberfläche des Blockdeckels 5 bündig abschließen.

## Patentansprüche

1. Mehrzellige Batterie mit in den Batteriedeckel integrierter zentraler Entgasungsleitung, die durch einen porösen Körper nach außen abgeschlossen ist, dadurch gekennzeichnet, daß der poröse Körper (2) senkrecht zur Elektrolytoberfläche angeordnet ist und in einer parallel zur Elektrolytoberfläche liegenden Richtung (7) durchströmt wird und daß der poröse Körper (2) eine vertikale Längserstreckung aufweist, die bis weit unter das Niveau der Entgasungsleitung herabreicht, so daß gebildetes Flüssigkondensat aus der durchströmten Mitte des porösen Körpers in seinen unteren Teil abwandert, daß vor dem porösen Körper, in Strömungsrichtung gesehen, ein Überdruckventil angeordnet ist, und daß der poröse Körper (2) und das Überdruckventil in einer Kapsel (1) angeordnet sind, welche durch eine Öffnung des Batteriedeckels (5) senkrecht in eine Unterbrechung (3) der Entgasungsleitung (4) einschiebbar ist.

2. Mehrzellige Batterie nach Anspruch 1, dadurch gekennzeichnet, daß das Überdruckventil ein auf den porösen Körper abgestütztes Federventil (14, 15) ist.

3. Mehrzellige Batterie nach Anspruch 2, dadurch gekennzeichnet, daß in Schließstellung des Ventils mittels einer Feder (15) ein von einem Zapfen (13) geführter Ventilteller (14) an die mit Ventilöffnungen (16) versehene Bodenwand (12) der Kapsel anpreßbar ist.

4. Mehrzellige Batterie nach Anspruch 3, dadurch gekennzeichnet, daß die Auflagefläche des Ventiltellers (14) auf dem Boden (12) der Kapsel (1) groß im Verhältnis zu den Ventilöffnungen (16) ist.

5. Mehrzellige Batterie nach Anspruch 4, dadurch gekennzeichnet, daß der Ansprechdruck des Federventils 50 mbar bis 100 mbar beträgt.

6. Mehrzellige Batterie nach den Ansprüchen 1 oder 4, dadurch gekennzeichnet, daß die Kapsel (1) mittels Dichtlippen (17) im Deckel nach beiden Seiten abgedichtet ist.

## Claims

1. Multicell battery with a central degassing line integrated in the battery cover and outwardly closed off by a porous body, characterised in that the porous body (2) is arranged perpendicular to the surface of the electrolyte and is flowed through in a direction (7) lying parallel to the surface of the electrolyte, and in that the porous body (2) has a vertical longitudinal extension which extends far below the level of the degassing line such that any liquid condensate formed migrates from the flowed-through centre of the porous body into its lower part, in that a pressure-relief valve is arranged in front of the porous body, as seen in the direction of flow and in that the porous body (2) and the pressure-relief valve are arranged in a capsule (1), which can be pushed perpendicularly into an interruption (3) in the degassing line (4) through an opening of the battery cover (5).

2. Multicell battery in accordance with Claim 1, characterised in that the pressure-relief valve is a spring-loaded valve (14,15) supported on the porous body.

3. Multicell battery in accordance with Claim 2, characterised in that in the closed position of the valve, a spring (15) can urge a valve plate (14) guided by a pin (13) against the capsule base wall (12) which is provided with valve openings (16).

4. Multicell battery in accordance with Claim 3, characterised in that the bearing surface of the valve plate (14) on the base (12) of the capsule (1) is large in relation to the valve openings (16).

5. Multicell battery in accordance with Claim 4, characterised in that the reaction pressure of the spring-loaded valve is 50 mbar to 100 mbar.

6. Multicell battery in accordance with Claims 1 or 2, characterised in that the capsule (1) is sealed off on both sides by means of sealing lips (17) in the cover.

## Revendications

1. Batterie multicellulaire avec une canalisation centrale de dégazage intégrée dans le couvercle de batterie et qui est fermée vers l'extérieur par une structure poreuse (2) disposée perpendiculairement à la surface de l'électrolyte est traversée par les gaz selon une direction parallèle à la surface de l'électrolyte, et la structure poreuse (2) a une extension longitudinale verticale qui s'étend largement au-dessous du niveau de la canalisation de dégazage, de sorte que le condensât liquide formé s'évacue à partir du milieu de la structure poreuse traversée par les gaz dans la partie inférieure de cette structure, en ce que, en amont de la structure poreuse, une soupape de surpression est disposée selon le sens de l'écoulement et que la structure poreuse (2) et la soupape de surpression sont disposées dans une capsule (1) qui est susceptible d'être insérée verticalement à travers une ouverture du couvercle (5) de la batterie dans une interruption (3) de la canalisation de dégazage (4).

2. Batterie multicellulaire selon la revendication 1, caractérisée en ce que la soupape de surpression est une soupape à ressort (14, 15) prenant appui sur la structure poreuse.

3. Batterie multicellulaire selon la revendication 2, caractérisée en ce que dans la position de fermeture de la soupape au moyen d'un ressort (15), une tête de soupape (14) guidée par un téton (13) est susceptible d'être pressée contre la paroi (12) du fond de la capsule munie d'orifices de soupape (16).

4. Batterie multicellulaire selon la revendication 3, caractérisée en ce que la surface d'application de la tête de soupape (14) sur le fond (12) de la capsule (1) est grande par rapport aux orifices de soupapes (16).

5. Batterie multicellulaire selon la revendication 4, caractérisée en ce que la pression de réaction de la soupape à ressort est de 50 mbars à 100 mbars.

6. Batterie multicellulaire selon la revendication 1 ou la revendication 2, caractérisée en ce que la capsule (1) est rendue étanche sur ses deux faces dans le couvercle par des lèvres d'étanchéité (17).
